Europäisches Patentamt

European Patent Office

Office européen des brevets

(11) Veröffentlichungsnummer : **0 160 812**
**B1**

(12)

# EUROPÄISCHE PATENTSCHRIFT

(45) Veröffentlichungstag der Patentschrift :
09.09.87

(51) Int. Cl.⁴ : **B 01 D 53/34**, F 23 J 15/00,
F 27 D 17/00

(21) Anmeldenummer : 85103004.9

(22) Anmeldetag : 15.03.85

(54) Verfahren und Vorrichtung zur Reinigung von Rauchgasen in Feuerungsanlagen.

(30) Priorität : 08.05.84 DE 3416947

(43) Veröffentlichungstag der Anmeldung :
13.11.85 Patentblatt 85/46

(45) Bekanntmachung des Hinweises auf die Patenterteilung : 09.09.87 Patentblatt 87/37

(84) Benannte Vertragsstaaten :
AT BE CH DE FR GB IT LI NL SE

(56) Entgegenhaltungen :
EP-A- 0 063 195
DE-A- 2 728 722
DE-A- 3 003 553
DE-A- 3 148 587

(73) Patentinhaber : Reichart, Johannes
Alleenstrasse 108
D-7314 Kirchheim/Teck (DE)

(72) Erfinder : Reichart, Johannes
Alleenstrasse 108
D 7312 Kirchheim/Teck (DE)
Erfinder : Hammerlehle, Dieter
Jefinger Strasse 20/1
D 7312 Kirchheim/Teck (DE)

(74) Vertreter : Wolf, Eckhard et al
Patentanwälte, Dr.-Ing. Eugen Maier Dr.-Ing. Eckhard
Wolf Dr.-Ing. Hans Vetter Pischekstrasse 19
D-7000 Stuttgart 1 (DE)

EP 0 160 812 B1

## Beschreibung

Die Erfindung betrifft ein Verfahren und eine Vorrichtung zur Reinigung von Rauchgasen in Feuerungsanlagen der im Oberbegriff der Ansprüche 1 und 10 angegebenen Gattung.

Bei einem bekannten Verfahren dieser Art (EP-A-0 063 195) wird das Rauchgas an einer aus mehreren im Abstand voneinander angeordneten, quer zum Rauchgasstrom sich erstreckenden gekühlten Rohrbündeln bestehenden Kühlstrecke vorbeigeleitet und dabei abgekühlt. Die einzelne gekühlte Teilstrecken bildenden Rohrbündel werden von dem Rauchgas von unten nach oben angeströmt, während das sich dabei bildende Kondensat von oben nach unten tropft und dabei eine Reinigungswirkung an den Rohroberflächen ausübt. Von dem Kondensat werden Rauchgasinhaltsstoffe aufgenommen und nach außen geführt. Die Übergangsbereiche zwischen den einzelnen Teilstrecken bilden eine Querschnittserweiterung, aufgrund der die Rauchgasgeschwindigkeit gegenüber der im Bereich der Rohrbündel auftretenden Strömungsgeschwindigkeit vermindert wird. Das von den einzelnen Rohrbündeln niedertropfende Kondensat wird daher die Übergangsbereiche mehr oder weniger frei durchfallen. Das Wärmeübergangsverhalten eines in dieser Weise ausgebildeten Wärmetauschers wird auch bei einer Vielzahl von Wärmetauscherrohren wegen des mangelhaften Kontakts mit den Rauchgasen relativ schlecht sein, so daß eine große Wärmetauscherfläche und damit eine recht große Bauweise erforderlich ist.

Der Erfindung liegt daher die Aufgabe zugrunde, ein Verfahren sowie eine Vorrichtung zur Rauchgasreinigung nach dem Kondensationsprinzip zu entwickeln, womit besonders günstige Wärmeübertragungseigenschaften und daher eine kompakte Bauweise, sowie eine hervorragende Reinigungswirkung sowohl in den Rauchgasen selbst als auch in den von den Rauchgasen durchströmten Bereichen erzielt werden können.

Zur Lösung dieser Aufgabe werden die in den Ansprüchen 1 und 10 angegebenen Merkmalskombinationen vorgeschlagen. Weitere vorteilhafte Ausgestaltungen und Weiterbildungen der Erfindung ergeben sich aus den Unteransprüchen.

Die Erfindung geht von dem Gedanken aus, daß die im Zwangsdurchlauf durch die Kühlstrecke geführten Rauchgase in möglichst engen Kontakt mit dem innerhalb der Kühlstrecke entstehenden Kondensat gebracht werden, um einmal eine intensive Feststoff- und Gasauswaschung durch die Flüssigkeit zu erzielen und zum anderen die Kühlzellenwände durch ständiges Besprühen mit dem Kondensat sauberzuhalten.

Gemäß der Erfindung wird hierzu das Rauchgas durch mehrere in Strömungsrichtung hintereinander angeordnete Kühlzellen geleitet und im Übergangsbereich zwischen den einzelnen Kühlzellen auf ein Mehrfaches der mittleren Strömungsgeschwindigkeit beschleunigt, so daß das im Gegenstrom zum Rauchgas durch die Kühlstrecke geleitete Kondensat tropfenweise vom beschleunigten Rauchgasstrom mitgenommen und in den Kühlzellen versprüht wird. Zweckmäßig werden zu diesem Zweck die übereinander angeordneten Kühlzellen vom Rauchgas im wesentlichen senkrecht von unten nach oben durchströmt und im Bereich mehrerer kleiner Öffnungen in den Trennwänden zwischen den Kühlzellen auf die erhöhte Strömungsgeschwindigkeit gebracht, während das Kondensat aufgrund der Schwerkraft von oben nach unten tropfenweise durch die Kühlzellen und die kleinen Durchtrittsöffnungen geleitet wird. Die starke Einschnürung des Strömungsquerschnitts im Bereich der Durchtrittsöffnungen führt zu einer entsprechenden Beschleunigung des Rauchgasstroms und zu einer starken Durchwirbelung in den einzelnen Kühlzellen. Die in den kleinen Durchtrittsöffnungen befindlichen Kondensattröpfchen werden von dem Rauchgasstrom mitgerissen und innerhalb der Kühlzellen versprüht. Dadurch muß zwar ein nicht unerheblicher Druckabfall in der Kühlstrecke in Kauf genommen werden, der eine entsprechend größere Auslegung des hinter der Kühlstrecke angeordneten Sauggebläses erfordert. Dies wird jedoch weit überkompensiert und durch die Vorteile, die sich bei der Reinigung der Rauchgase und des Wärmetauscherraums sowie durch den besseren Wärmeübergang und der dadurch bedingten kompakteren Bauweise ergeben.

Im folgenden wird die Erfindung anhand der Zeichnung näher erläutert. Es zeigen

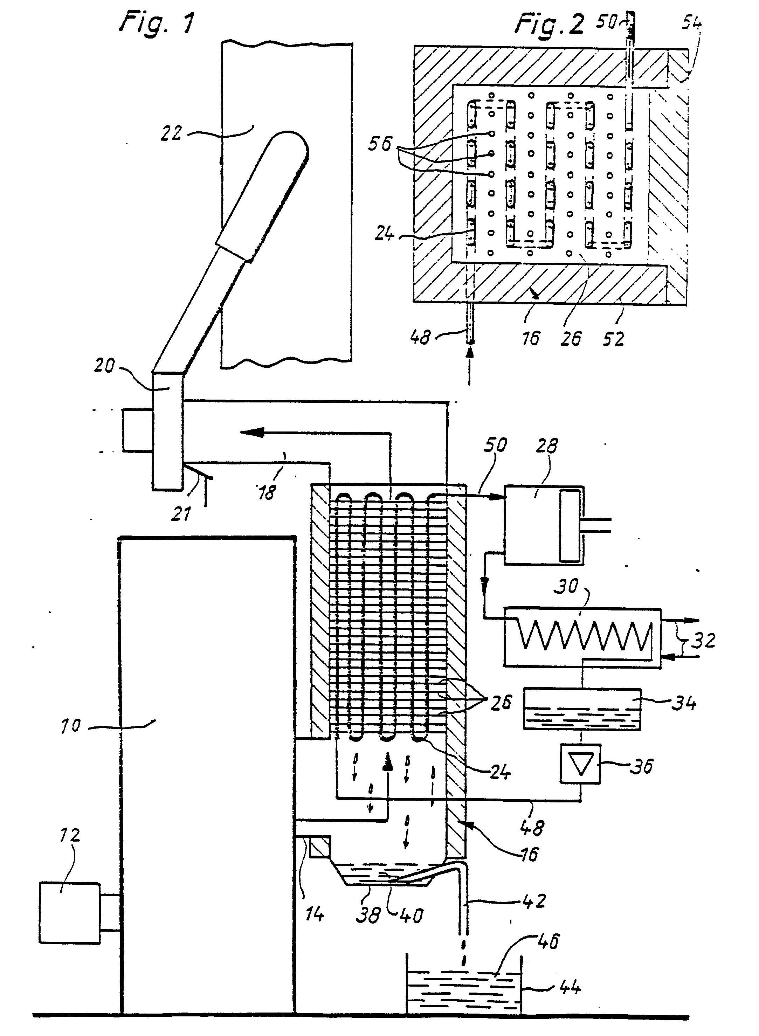

Figur 1 ein Schema einer Heizfeuerung mit Kondensationsreiniger und Wärmepumpe ;

Figur 2 einen horizontalen Schnitt durch den Kondensationsreiniger nach Fig. 1.

Die Heizfeuerung besteht im wesentlichen aus einem Heizkessel 10 mit einem Brennergebläse 12 sowie einem Rauchgasstutzen 14, der über einen Kondensationsreiniger 16, Verbindungsrohre 18 sowie ein Sauggebläse 20 mit einem Schornstein 22 verbunden ist. Der Kondensationsreiniger 16 enthält einen Wärmetauscher, dessen von einem Kältemittel durchströmte Rohrschlange 24 mit horizontal ausgerichteten, im Abstand übereinander angeordneten, Trennwände 26 bildenden Wärmeleitungsrippen aus Aluminium versehen ist. Der Wärmetauscher ist so in ein im Querschnitt rechteckiges oder quadratisches Gehäuse 52, 54 mit wärmeisolierten Wänden eingepaßt, daß die Zwischenräume zwischen den Trennwänden 26 unter Bildung geschlossener Kühlzellen weitgehend gegen seitlichen Gasaustritt abgedichtet sind. Die Kühlzellen stehen lediglich über eine Anzahl über die Trennwandfläche verteilt angeordneter kreisförmiger Durchtrittsöffnungen miteinander in Verbindung, durch die das von unten her eingeleitete Rauchgas vom Gebläse 20 hindurchgesaugt wird. Im Bereich der engen Bohrungen 56 wird das Rauchgas lokal auf Strömungsgeschwindigkeiten zwischen 10 und 20 m/s beschleunigt. Dadurch wird das gleichfalls nur durch die engen Öffnungen 56 von oben nach unten hindurchtropfende Kondensat vom Rauchgasstrom erfaßt und innerhalb der Kühlzellen versprüht. Das Kondensat ist damit maßgeblich am Wärmeübergang zwischen dem Rauchgas und den die Trennwände 26 bildenden Kühlrippen beteiligt, so daß sich insgesamt ausgezeichnete Wärmeübertragungseigenschaften ergeben. Damit läßt sich auch mit einer kompakten Bauweise des Wärmetauscherraums, dessen Querschnitt kaum größer als der der Anschlußrohre zu sein braucht, je nach Wahl des verwendeten Kältemittels eine Abkühlung der Rauchgase von etwa 200 °C bis nahe zum Gefrierpunkt erzielen.

Aufgrund der Sprühwirkungen im Bereich der engen Durchtrittsöffnungen wird außerdem einmal eine intensive Reinigung der Rauchgase von Feststoffen, wie Ruß, und von löslichen gasförmigen Bestandteilen, wie $SO_2$, erzielt, die in suspendierter und gelöster Form von den nach unten fallenden Kondensat-Tropfen in die Kondensatpfanne 38 mitgenommen werden. Andererseits werden auch die Kühlzellen selbst durch das versprühte Kondensat ständig selbsttätig gereinigt und von etwaigen Ablagerungen freigehalten. Ebenso wird dadurch ein unerwünschtes Zusetzen der engen Öffnungen 56 wirksam vermieden.

Das Kondensat 40 wird aus der Pfanne 38 mit Hilfe eines syphonartigen Rohres 42 tropfenweise nach außen in einen Auffangbehälter 44 geleitet, aus dem das Kondensat 46 sodann, gegebenenfalls nach vorheriger Neutralisation und/oder Verdünnung, an die Kanalisation abgegeben werden kann.

Die aus den Rauchgasen entnommene Wärme kann über einen Wärmepumpenkreislauf zu Heizzwecken benutzt werden. In der in der Zeichnung schematisch angedeuteten Wärmepumpe wird ein Kältemittel, vorzugsweise der Stufe R22, über einen Kompressor 28 einem Kondensator mit Wärmetauscher 30 zugeführt, von dem über einen externen Kreislauf 32 die dort anfallende Wärme entnommen wird. Das Kältemittel wird anschließend in dem Verflüssiger 34 verflüssigt und über ein Drosselventil 36 und die Leitung 48 dem Verdampfer 24 zugeleitet, der über die Austrittsleitung 50 wiederum in den Kompressor 28 mündet.

### Patentansprüche

1. Verfahren zur Reinigung von Rauchgasen in Feuerungsanlagen, bei welchem Rauchgasinhaltsstoffe durch Abkühlung auf einer Kühlstrecke kondensiert und teilweise im Kondensat gelöst werden, und bei welchem das Rauchgas und das Tropfen bildende Kondensat entlang der Kühlstrecke im Gegenstrom zueinander durch mehrere in Strömungsrichtung hintereinander angeordnete gekühlte Teilstrecken geleitet werden, dadurch gekennzeichnet, daß das Rauchgas im Übergangsbereich zwischen den einzelnen gekühlten Teilstrecken auf ein Mehrfaches der innerhalb der Teilstrecken auftretenden Strömungsgeschwindigkeit beschleunigt wird, und daß das Kondensat tropfenweise von dem im Übergangsbereich beschleunigten Rauchgasstrom mitgerissen und in den Teilstrecken versprüht wird.

2. Verfahren nach Anspruch 1, bei welchem die übereinander angeordneten Teilstrecken vom Rauchgas im wesentlichen senkrecht von unten nach oben durchströmt werden, dadurch gekennzeichnet, daß das Rauchgas im Bereich mehrerer kleiner Öffnungen in Trennwänden zwischen den Teilstrecken auf die erhöhte Strömungsgeschwindigkeit gebracht wird, während das Kondensat aufgrund der Schwerkraft von oben nach unten tropfenweise durch die kleinen Öffnungen in den Trennwänden geleitet wird.

3. Verfahren nach Anspruch 2, dadurch gekennzeichnet, daß die Trennwände durch mindestens einen Kältemittelkreislauf gekühlt werden.

4. Verfahren nach einem der Ansprüche 1 bis 3, dadurch gekennzeichnet, daß das Rauchgas von einem in Strömungsrichtung hinter der Kühlstrecke angeordneten Gebläse angesaugt und durch eine Auslaßöffnung oder einen Schornstein in die Umgebungsluft abgeblasen wird.

5. Verfahren nach einem der Ansprüche 1 bis 4, dadurch gekennzeichnet, daß die Strömungsgeschwindigkeit des Rauchgases im Übergangsbereich zwischen den Teilstrecken auf mindestens 10 m/s, vorzugsweise auf mehr als 15 m/s, beschleunigt wird.

6. Verfahren nach einem der Ansprüche 1 bis 5, dadurch gekennzeichnet, daß das Abtropfende Kondensat in einer im Rauchgasbereich angeordneten Pfanne aufgefangen und vorzugsweise über ein syphonartiges Standrohr in einen Raum außerhalb des Rauchgasbereichs geleitet wird.

7. Verfahren nach einem der Ansprüche 1 bis 6, dadurch gekennzeichnet, daß das Rauchgas entlang der Kühlstrecke mindestens auf die Temperatur der Umgebungsluft abgekühlt wird.

8. Verfahren nach Anspruch 7, dadurch gekennzeichnet, daß das Rauchgas entlang der Kühlstrecke auf eine Temperatur nahe dem Gefrierpunkt von Wasser gebracht wird, und daß hinter der Kühlstrecke die relative Feuchtigkeit im gereinigten Rauchgas entweder durch Aufheizung oder durch Beimischung wärmerer Umgebungsluft erniedrigt wird.

9. Verfahren nach einem der Ansprüche 1 bis 8, dadurch gekennzeichnet, daß die dem Rauchgasstrom entzogene Wärme über einen Kältemittelkreislauf einem Wärmespeicher für Heizungs- oder Heißwasserbereitungszwecke zugeleitet wird.

10. Vorrichtung zur Reinigung von Rauchgasen in Feuerungsanlagen mit einem im Rauchgasstrom angeordneten, vorzugsweise von einem Kältemittel durchströmten, mit Wärmeleitungsrippen versehenen Wärmetauscher zur Durchführung des Verfahrens nach einem der Ansprüche 1 bis 9, dadurch gekennzeichnet, daß die Zwischenräume zwischen den als Trennwände (26) ausgebildeten Wärmeleitungsrippen des Wärmetauschers (16) im Bereich ihrer Außenränder unter Bildung abgeschlossener Kühlzellen durch eine Außenwand (52, 54) verschlossen sind, daß in jeder Trennwand (26) eine größere Anzahl enger Öffnungen (56) verteilt angeordnet ist, und daß das Rauchgas durch die engen Öffnungen (56) der in Strömungsrichtung hintereinander angeordneten Kühlzellen hindurchleitbar ist, während das in den Kühlzellen entstehende Kondensat im Gegenstrom zum Rauchgas durch die engen Öffnungen (56) hindurchleitbar ist.

11. Vorrichtung nach Anspruch 10, dadurch gekennzeichnet, daß die Kühlzellen unmittelbar am Rauchgasaustritt (14) eines Heizkessels (10) angeschlossen sind und daß sich in Strömungsrichtung hinter den Kühlzellen ein Sauggebläse (20) zum Ansaugen der Rauchgase und Abblasen in die Umgebungsluft befindet.

12. Vorrichtung nach Anspruch 11, dadurch gekennzeichnet, daß das Sauggebläse (20) eine Öffnung zum Beimischen von Umgebungsluft in den Rauchgasstrom aufweist.

13. Vorrichtung nach einem der Ansprüche 10 bis 12, dadurch gekennzeichnet, daß der die Kühlzellen bildende Wärmetauscher (16) mit horizontal ausgerichteten, im Abstand übereinander angeordneten, als Trennwände (26) ausgebildeten Wärmeleitungsrippen versehen und in einem vom Rauchgas von unten nach oben durchströmten, wärmeisolierten Gehäuse (52, 54) angeordnet ist, und daß im Rauchgasbereich unterhalb des Wärmetauschers eine Auffangpfanne (38) für das durch die engen Öffnungen (56) nach unten tropfende Kondensat (40) angeordnet ist.

14. Vorrichtung nach Anspruch 13, dadurch gekennzeichnet, daß die Auffangpfanne (38) über ein syphonartiges Tropfrohr (42) mit dem Außenraum verbunden ist.

15. Vorrichtung nach Anspruch 13 oder 14, dadurch gekennzeichnet, daß das wärmeisolierte Gehäuse (52, 54) einen im wesentlichen rechteckigen oder quadratischen Querschnitt aufweist und über eine abnehmbare Tür oder Verschlußplatte (54) von außen her zugänglich ist.

16. Vorrichtung nach einem der Ansprüche 10 bis 14, dadurch gekennzeichnet, daß die engen Öffnungen (55) so bemessen sind, daß bei einem vorgegebenen mittleren Rauchgasdurchsatz eine lokale Beschleunigung der Strömungsgeschwindigkeit auf mindestens 10 m/s, vorzugsweise auf über 15 m/s, auftritt.

17. Vorrichtung nach einem der Ansprüche 10 bis 16, dadurch gekennzeichnet, daß die engen Öffnungen (56) bezogen auf den Gehäusequerschnitt eine effektive Querschnittsverengung von mindestens 1 : 10, vorzugsweise von mindestens 1 : 20, bilden.

18. Vorrichtung nach einem der Ansprüche 10 bis 17, dadurch gekennzeichnet, daß die Trennwände (26) aus Aluminiumblechen bestehen.

## Claims

1. A process for purifying flue gases in combustion plants, wherein substances contained in the flue gases are condensed by cooling on a cooling line and in part dissolve in the condensate, and wherein the flue gas and the condensate forming droplets are conducted counter-currently along the cooling line through several cooled sub-lines arranged in series in the direction of flow, characterised in that in the transition zone between the various cooled sub-lines the flue gas is accelerated to several times the flow rate prevailing in the sub-lines, and that the condensate is carried along dropwise by the flue gas stream accelerated in the transition zone and is atomised in the sub-lines.

2. The process as claimed in Claim 1, wherein the flue gas flows along the stacked sub-lines in essentially vertical direction from bottom to top, characterised in that the flue gas is brought up to the increased flow rate in the region of several small openings in partitions between the sub-lines, while the force of gravity causes the condensate to be conducted dropwise from top to bottom through the small openings in the partitions.

3. The process as claimed in Claim 2, characterised in that the partitions are cooled by at least one coolant cycle.

4. The process as claimed in any of Claims 1 to 3, characterised in that the flue gas is aspirated by a blower arranged behind the cooling line in the direction of flow and is released through an outlet port or chimney into the surrounding air.

5. The process as claimed in any of Claims 1 to 4, characterised in that the flow rate of the flue gas is accelerated in the transition zone between the sub-lines to at least 10 m/s, preferably more than 15 m/s.

6. The process as claimed in any of Claims 1 to 5, characterised in that as it drips, the condensate is collected in a pan arranged in the flue gas zone and is preferably conducted via a syphon-type pipe riser into an area outside the flue gas zone.

7. The process as claimed in any of Claims 1 to 6, characterised in that along the cooling line the flue gas is cooled to at least the temperature of the surrounding air.

8. The process as claimed in Claim 7, characterised in that along the cooling line the flue gas is brought to a temperature near the freezing point of water, and that behind the cooling line the relative humidity in the purified flue gas is reduced either by heating or by admixing warmer ambient air.

9. The process as claimed in any of Claims 1 to 8, characterised in that the heat removed from the flue gas stream is passed via a coolant cycle to a heat accumulator for use in heating or hot water production.

10. A device for purifying flue gases in combustion plants, comprising a heat exchanger for carrying out the process as claimed in any of Claims 1 to 9 which is disposed in the flue gas stream, preferably has a coolant flowing through it, and is provided with heat conducting fins, characterised in that the interstices between the heat conducting fins of the heat exchanger (16), which are in the form of partitions (26), are sealed by an outer wall (52, 54) in the region of their outer edges to form closed cooling cells, that in each partition (26) is distributed a large number of narrow openings (56), and that the flue gas can be channelled through the narrow openings (56) in the cooling cells disposed in series in the direction of flow, while the condensate that is forming in the cooling cells can be channelled through the narrow openings (56) counter-currently to the flue gas.

11. The device as claimed in Claim 10, characterised in that the cooling cells are connected directly at the flue gas outlet (14) of a boiler (10) and that behind the cooling cells in the direction of flow there is situated an aspirator (20) to extract the flue gases and release them into the surrounding air.

12. The device as claimed in Claim 11, characterised in that the aspirator (20) exhibits a port for adding ambient air to the flue gas stream.

13. The device as claimed in any of Claims 10 to 12, characterised in that the heat exchanger (16) forming the cooling cells is provided with horizontally aligned heat conducting fins spaced one over the other and constructed as partitions (26), and is disposed in a thermally insulated casing (52, 54) through which the flue gas flows from bottom to top, and that in the flue gas zone below the heat exchanger there is disposed a collecting pan (38) for the condensate (40) which trickles down through the narrow openings (56).

14. The device as claimed in Claim 13, characterised in that the collecting pan (38) is connected to the exterior by a syphon-type drip tube (42).

15. The device as claimed in Claim 13 or 14, characterised in that the thermally insulated casing (52, 54) has an essentially rectangular or square cross-section and is accessible from the outside via a removable door or cover plate (54).

16. The device as claimed in any of Claims 10 to 14, characterised in that the size of the narrow openings (55) is such that for a predetermined average flue gas throughput the flow rate is accelerated locally to at least 10 m/s, but preferably more than 15 m/s.

17. The device as claimed in any of Claims 10 to 16, characterised in that relative to the cross-section of the casing the narrow openings (56) form an effective cross-sectional constriction of at least 1 : 10, preferably at least 1 : 20.

18. The device as claimed in any of Claims 10 to 17, characterised in that the partitions (26) are made from aluminium sheets.

**Revendications**

1. Procédé pour la purification des fumées dans des installations de chauffage, selon lequel les composants des fumées, condensés par refroidissement dans un circuit, sont partiellement dissous dans le condensat, et selon lequel les fumées et le condensat, formant des gouttelettes, sont véhiculés à contre-courant dans le circuit de refroidissement, au travers de sections refroidies, disposées les unes derrière les autres dans le sens d'écoulement, caractérisé en ce que, dans la zone de transfert comprise entre les différentes sections refroidies, les fumées sont portées à une vitesse multiple de la vitesse d'écoulement dans les sections, et en ce que le condensat est entraîné goutte-à-goutte par le courant de fumées, accéléré dans la zone de transfert, et est pulvérisé dans les sections.

2. Procédé suivant la revendication 1, selon lequel les sections superposées sont essentiellement parcourues par les fumées du bas vers le haut, dans le sens vertical, caractérisé en ce que la vitesse des fumées est accélérée dans la zone de plusieurs orifices de petite dimension, prévus dans les cloisons de séparation des sections, tandis que le condensat s'écoule par gravité du haut vers le bas, goutte-à-goutte, au travers des petits orifices précités.

3. Procédé suivant la revendication 2, caractérisé en ce que les cloisons sont refroidies par un circuit au moins de fluide réfrigérant.

4. Procédé suivant l'une quelconque des revendications 1 à 3, caractérisé en ce que les fumées sont aspirées par un ventilateur, monté en aval du circuit de refroidissement dans le sens d'écoulement, et sont évacuées à l'atmosphère par un orifice de sortie ou par une cheminée.

5. Procédé suivant l'une quelconque des revendications 1 à 4, caractérisé en ce que la vitesse d'écoulement des fumées est portée à 10 m/s au moins, à plus de 15 m/s de préférence, dans la zone de transfert entre les sections.

6. Procédé suivant l'une quelconque des revendications 1 à 5, caractérisé en ce que les gouttelettes de condensat sont recueillies dans une cuve, disposée dans la zone des fumées, puis dirigées dans un espace externe à la zone précitée, par l'intermédiaire d'un tube du type siphon de préférence.

7. Procédé suivant l'une quelconque des revendications 1 à 6, caractérisé en ce que les fumées, véhiculées dans le circuit de refroidissement, sont au moins refroidies à la température de l'air ambiant.

8. Procédé suivant la revendication 7, caractérisé en ce que les fumées, véhiculées dans le circuit de refroidissement, sont amenées à une température proche du point de congélation de l'eau, et en ce que l'humidité relative des fumées est réduite par chauffage ou par addition d'air ambiant plus chaud, en aval du circuit de refroidissement.

9. Procédé suivant l'une quelconque des revendications 1 à 8, caractérisé en ce que la chaleur cédée par le courant de fumées est dirigée dans un accumulateur, par l'intermédiaire d'un circuit de fluide réfrigérant, pour des objectifs de chauffage ou de production d'eau chaude.

10. Dispositif pour la purification de fumées dans des installations de chauffage, avec un échangeur de chaleur prévu pour la réalisation du procédé suivant l'une quelconque des revendications 1 à 9, cet échangeur étant monté dans le courant de fumées, parcouru de préférence par un réfrigérant et doté d'ailettes de conduction thermique, caractérisé en ce que les espaces intermédiaires entre les ailettes de conduction thermique de l'échangeur (16), représentées par des cloisons (26), sont fermés par une paroi extérieure (52, 54) dans la zone de leurs bords externes, en formant des cellules de refroidissement fermées, en ce que plusieurs orifices étroits (56) sont répartis dans chaque cloison (26), et en ce que les fumées peuvent passer au travers des orifices (56) des cellules de refroidissement, disposées les unes derrière les autres dans le sens d'écoulement, tandis que le condensat, formé dans les cellules, peut s'écouler dans les orifices étroits (56), à contre-courant des fumées.

11. Dispositif suivant la revendication 10, caractérisé en ce que les cellules de refroidissement sont raccordées directement à la sortie des fumées (14) d'une chaudière de chauffage central (10), et en ce qu'un ventilateur extracteur (20), monté en aval des cellules dans le sens d'écoulement, permet d'aspirer les fumées et de les évacuer à l'atmosphère.

12. Dispositif suivant la revendication 11, caractérisé en ce que le ventilateur extracteur (20) présente une ouverture pour l'addition d'air ambiant dans le courant de fumées.

13. Dispositif suivant l'une quelconque des revendications 10 à 12, caractérisé en ce que l'échangeur thermique (16), formant les cellules de refroidissement, est muni d'ailettes de conduction thermique horizontales, superposées avec un certain écartement mutuel et représentées par des cloisons (26), et est monté dans un carter (52, 54) calorifugé, parcouru par les fumées du bas vers le haut, et en ce qu'une cuve (38), prévue pour le condensat qui s'écoule vers le bas par les orifices étroits (56), est disposée dans la zone des fumées, au-dessous de l'échangeur thermique.

14. Dispositif suivant la revendication 13, caractérisé en ce que la cuve (38) est reliée à l'extérieur par l'intermédiaire d'un tube du type siphon (42).

15. Dispositif suivant l'une des revendications 13 et 14, caractérisé en ce que le carter calorifugé (52, 54) présente une section essentiellement rectangulaire ou carrée, et est accessible de l'extérieur par l'intermédiaire d'une porte amovible ou d'une plaque de fermeture (54).

16. Dispositif suivant l'une quelconque des revendications 10 à 14, caractérisé en ce que les orifices étroits (56) sont dimensionnés de manière à porter la vitesse locale d'écoulement à 10 m/s au moins, à plus de 15 m/s de préférence, pour un débit moyen des fumées prédéfini.

17. Dispositif suivant l'une quelconque des revendications 10 à 16, caractérisé en ce que les orifices étroits (56) forment un rétrécissement de section effectif de 1 : 10 au moins, d'au moins 1 : 20 de préférence, par rapport à la section du carter.

18. Dispositif suivant l'une quelconque des revendications 10 à 17, caractérisé en ce que les cloisons (26) se composent de tôles d'aluminium.

Fig. 1   Fig. 2